# EUROPEAN PATENT SPECIFICATION

(11) **EP 2 302 474 B1**
(45) Date of publication and mention of the grant of the patent: **29.03.2017**
(21) Application number: 09011840.7
(22) Date of filing: 17.09.2009
(51) Int. Cl.: G05B 19/042, G08C 17/00, A47L 15/42, F24C 7/08, F24C 15/20, F25D 29/00, A47L 15/00

(54) **A control system for a domestic appliance**
Steuerungssystem für ein Haushaltsgerät
Système de commande pour appareil électroménager

(43) Date of publication of application: 30.03.2011
(60) Divisional application: 17155644.2
(73) Proprietor: Electrolux Home Products Corporation N.V., 1130 Brussels (BE)
(72) Inventor: Kaiser, Kersten, 91541 Rothenburg o.d. Tauber (DE); Benold, Frank, 31013 Codogne (IT)
(74) Representative: Electrolux Group Patents

(56) References cited:
- EP-A1- 1 978 426
- WO-A-00/51090
- WO-A-2005/069245
- US-A1- 2007 057 792
- US-B1- 6 747 573

## Description

The present invention relates to a control system for a domestic appliance according to claim 1. Further, the present invention relates to a domestic appliance with a control system.

Domestic appliances are controlled by one or more mechanical switches. Said switches are connected to the controlled component of the domestic appliance either by wires or wireless via a control device. The wireless switch often requires an own energy source, e.g. a battery, which has to be exchanged from time to time.

Another problem of the wireless switch is, that the user does not always recognize, if the signal from said switch has been really received by the control device of the domestic appliance.

US 2007/0057792 A1 discloses a wireless and batteryless array of input devices. An array of contacts is used to capture the inputs of a user. Said inputs can be wireless communicated by passive RFID technology. The functions of the contacts can be stored in a memory.

WO 00/51090 discloses a passive remote control system. A passive remote control device is powered by radio frequency exciter and receiver and used within said remote control system in order to control the operation of a control device. The remote control device and the radio frequency exciter and receiver communicate without wires via electrostatic or electromagnetic radiation. The remote control device does not require any own power source. US 6,747,573 B1 discloses an apparatus for generating coded high frequency signals. Non-electrical primary energy available from the surroundings is converted into electrical energy by a converter. Said converter may be a piezoelectric element, a pyro electric body, a thermocouple element pair and/or solar cells, for example.

It is the object of the present invention to provide an improved control system for a domestic appliance and a corresponding domestic appliance with a control system, wherein the control system allows a low complexity of the domestic appliance.

This object is achieved by the control system for a domestic appliance according to claim 1.

According to the present invention the electric energy for sending the wireless signals is produced or producible by actuating and/or touching the operating element by a user, wherein the operating device is an integrated part of a pivoting or slidable component of the domestic appliance or the operating device is a stationary device arranged in the environment of said domestic appliance.

The core idea of the present invention is the combination of the operating device and the display, wherein the operating device generates the complete electric energy for the wireless signals and the display is a part of the control device and supplied by the power source of the domestic appliance. The display can show the status of the operating device, the control device and the domestic appliance. Thus, the user can definitely recognize, if the wireless signal from the operating device has been really received by the control device of the domestic appliance.

According to the preferred embodiment of the present invention the electric energy for sending the wireless signals is produced or producible by transforming the mechanical energy of the actuation of the operating element. For example, the electric energy for sending the wireless signals is produced or producible by at least one piezo-electric, magneto-strictive and/or magneto-dynamic element.

The electric energy for sending the wireless signals may be produced or producible by touching the operating element, wherein the human body of the user acts as a capacitor.

Alternatively or additionally, the electric energy for sending the wireless signals may be produced or producible by touching the operating element, wherein the temperature gradient between the finger or the hand of the user and the operating element is used.

For example, the domestic appliance is a cooking oven, wherein the operating device is arranged at the oven door and the display is arranged at a front panel of the cooking oven.

Further, the domestic appliance is a cooking hob, wherein the operating device is disposed at a distance from the cooking hob and the display is arranged on the surface of the cooking hob.

According to another example, the domestic appliance is a refrigerator, wherein the operating device is arranged at the refrigerator door and the display is arranged at a refrigerator cabinet of the refrigerator. An active part of the display may be arranged at the refrigerator cabinet and a passive part of the display is arranged at the refrigerator door of the refrigerator.

According to a further embodiment of the present invention, the domestic appliance is a dishwasher, wherein the operating device is disposed at a distance from the dishwasher and the display is arranged on a dishwasher door of the dishwasher. Preferably, the display is arranged on an upper narrow side of the dishwasher door.

Alternatively, the domestic appliance is a dishwasher, wherein the operating device is disposed at a distance from the dishwasher and the dishwasher comprises a projector unit, so that the display is beamed or beamable onto a floor or a wall beside the dishwasher. In this case, the information is projected onto the kitchen floor or kitchen wall. The projector unit may be an integrated part of the dishwasher.

According to another application of the present invention the domestic appliance is a washing machine, wherein the operating device is arranged at a front side of a soap drawer of the washing machine and the display is arranged at the front side of the cabinet of the washing machine.

At last, the domestic appliance may be an exhaust hood, wherein the operating device is disposed at a distance from the exhaust hood and the display is arranged at the exhaust hood.

Alternatively, the domestic appliance is an exhaust hood, wherein the operating device is disposed at a distance from the exhaust hood and the display is arranged on the surface of the cooking hob.

The object of the present invention is further achieved by a domestic appliance according to the claim 15.

The domestic appliance according to the present invention comprises at least one control system as described above.

The invention will be explained in more detail below by means of exemplary embodiments. Reference is thereby made to the accompanied drawings, wherein
- FIG 1: shows a schematic front view of a cooking oven with a control system according to a first embodiment of the present invention,
- FIG 2: shows a schematic top view of a cooking hob with the control system according to a second embodiment of the present invention,
- FIG 3: shows a schematic top view of a cooking hob with the control system according to a third embodiment of the present invention,
- FIG 4: shows a schematic perspective view of a refrigerator with the control system according to a fourth embodiment of the present invention,
- FIG 5: shows a schematic perspective view of a dishwasher with the control system according to a fifth embodiment of the present invention,
- FIG 6: shows a schematic perspective view of a washing machine with the control system according to a sixth embodiment of the present invention, and
- FIG 7: shows a schematic perspective view of an exhaust hood for a cooking hob with the control system according to a seventh embodiment of the present invention.

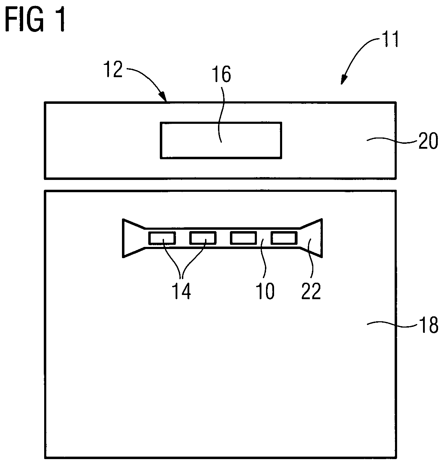

FIG 1 shows a schematic front view of a cooking oven 11 with a control system according to a first embodiment of the present invention. The cooking oven 11 comprises an oven cavity and an upper part above said oven cavity. The oven cavity is covered by an oven door 18. The upper part is covered by a front panel 20.

A door handle 22 is attached at the oven door 18. The door handle 22 comprises an operating device 10 with four operating elements 14. The operating device 10 with the four operating elements 14 is an integrated part of the door handle 22.

A display 16 is embedded within the front panel 20. The display is electrically connected to a control device 12 arranged behind the front panel 20. The control device 12 is provided for controlling the cooking oven 11. The display 16 illustrates the status of the cooking oven 11, the control device 12 and/or the operating elements 14.

There is a wireless connection between the operating device 10 and the control device 12. The operating element 14 sends a wireless signal to the control device 12, when said operating element 14 is actuated by the user. The required energy for the wireless signal is generated by pushing and/or touching the operating element 14.

Unlike the operating elements 14 the display 16 is electrically connected to the control device 12 and forms a part of said control device 12.

There are several possibilities for generating the electric energy for the wireless signal. According to a first example, the mechanical energy of the pushing and/or pressing the operating element 14 is transformed into electric energy. For example, this may be realized by a piezo-electric, magneto-strictive or a magneto-dynamic element.

According to a second example, the human body of the user may act as a capacitor while touching the operating element 14. The delivered charge of said capacitor can be used as electric energy. According to a third example, the temperature gradient between the finger of the user and the operating element 14 while pressing said operating element 14 is used for generating the electric energy.

The generated energy is small, but sufficient in order to send the wireless signal to the control device 12.

The inventive control system allows an arbitrary arrangement or positioning of the operating device 10 and the operating elements 14. Since the four operating elements 14 are attached at the door handle 22, there is no wiring connection between the oven door 18 and the control device 12. Further, no battery for the operating device 10 and no exchanges of batteries are required.

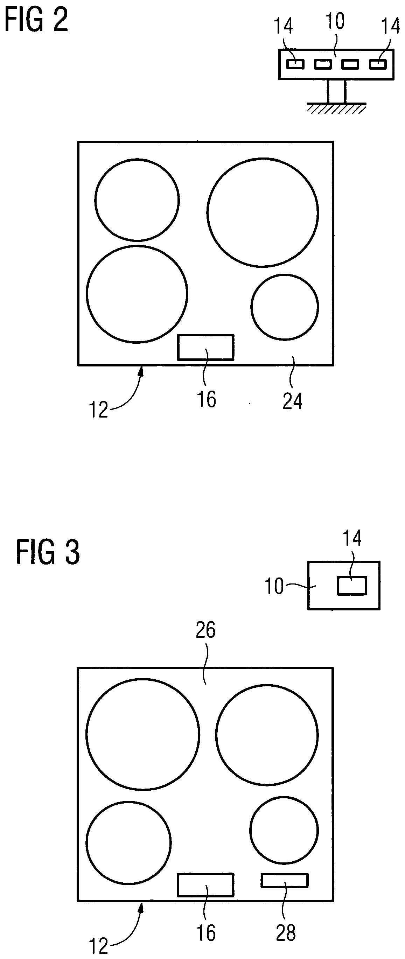

FIG 2 shows a schematic top view of a cooking hob 24 with the control system according to a second embodiment of the present invention. The cooking hob 24 comprises also a display 16 and a control device 12. The display 16 forms a part of the surface of the cooking hob 24. The control device 12 is arranged below the cooking hob 24.

Further, the cooking hob 24 comprises an operating device 10 with four operating elements 14. However, the operating device 10 with the four operating elements 14 is disposed at a distance from the cooking hob 24. The operating device 10 with the four operating elements 14 may be arranged at an arbitrary position in the environment of the cooking hob 24.

There is also a wireless connection between the operating device 10 and the control device 12 of the cooking hob 24. The operating element 14 sends a wireless signal to the control device 12, when said operating element 14 is actuated by the user. The required energy for the wireless signal is generated by pushing and/or touching the operating element 14 as described above.

FIG 3 shows a schematic top view of a cooking hob 26 with the control system according to a third embodiment of the present invention. The cooking hob 26 comprises also a display 16 on its surface and a control device 12 below it. Further, the cooking hob 26 comprises a touch screen 28. The touch screen 28 includes operating elements for activating single portions of the cooking hob 26 and for controlling the temperatures of said portions. The control device 12 is electrically connected to the display 16, the cooking hob 26 and the touch screen 28.

Additionally, the cooking hob 26 comprises an operating device 10 with one operating element 14 disposed at a distance from the cooking hob 26. Said operating element 14 is provided for switching on and off the cooking hob 24.

The operating element 14 is also wireless connected to the control device 12 of the cooking hob 26. The operating element 14 sends a wireless signal to the control device 12, when said operating element 14 is actuated by the user. The required energy for the wireless signal is generated by pushing and/or touching the operating element 14 as described above.

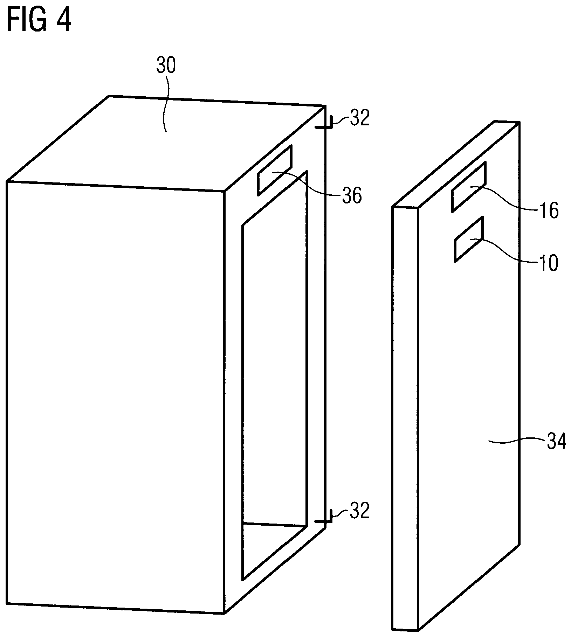

FIG 4 shows a schematic perspective view of a refrigerator with the control system according to a fourth embodiment of the present invention. The refrigerator comprises a refrigerator cabinet 30 and a refrigerator door 34.

The refrigerator door 34 is pivoting at the refrigerator cabinet 30 by door hinges 32. The door hinges 32 are attached at the right front side of the refrigerator cabinet 30. Thus, the rotational axis of the refrigerator door 34 is vertical. However, FIG 4 shows a demounted state of the refrigerator door 34. The refrigerator cabinet 30 comprises a control device 12, which is not shown in FIG 4.

The refrigerator cabinet 30 comprises a light source 36. The light source 36 is electrically connected to the control device 12 of the refrigerator cabinet 30. The light source 36 forms the rear part of a display 16. The proper display 16 is arranged within the refrigerator door 34. In a closed state of the refrigerator door 34, the light source 36 is positioned behind the display 16. The light source 36 may be formed by a set of light emitting diodes (LED) or as a projector. The display 16 may be formed by light guide elements and a projection surface. Thus, only the light source 36 requires electric energy, but the proper display 16 is a pure passive element in this embodiment.

The refrigerator door 34 comprises further an operating device 10. Said operating device 10 may comprise one or more operating elements 14. The operating element 14 is also wireless connected to the control device 12 of the refrigerator cabinet 30. The operating element 14 sends a wireless signal to the control device 12, when said operating element 14 is actuated by the user. The required energy for the wireless signal is generated by pushing and/or touching the operating element 14 as described above.

There is no electric connection between the refrigerator door 34 and the refrigerator cabinet 30. The refrigerator cabinet 30 includes only passive electric components.

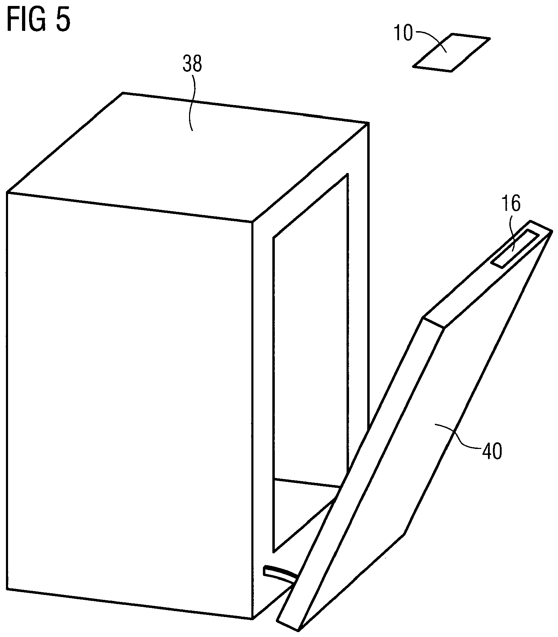

FIG 5 shows a schematic perspective view of a dishwasher with the control system according to a fifth embodiment of the present invention. The dishwasher comprises a dishwasher cabinet 38 and a dishwasher door 40.

The dishwasher door 40 is pivoting at the dishwasher cabinet 38. The rotational axis of the dishwasher door 38 is horizontal. The dishwasher door 40 comprises a display 16. Said display 16 is arranged within an upper narrow side of the dishwasher door 40.

The dishwasher comprises a control device 12, which is not shown in FIG 5. The control device 12 may be arranged within the dishwasher cabinet 38 or within the dishwasher door 40. The display 16 is electrically connected to the control device 12.

Further, the dishwasher comprises an operating device 10 with one or more operating elements 14. The operating device 10 is also wireless connected to the control device 12 of the dishwasher. The operating device 10 sends a wireless signal to the control device 12, when said operating device 10 is actuated by the user. The required energy for the wireless signal is generated by pushing and/or touching the operating device 10 as described above.

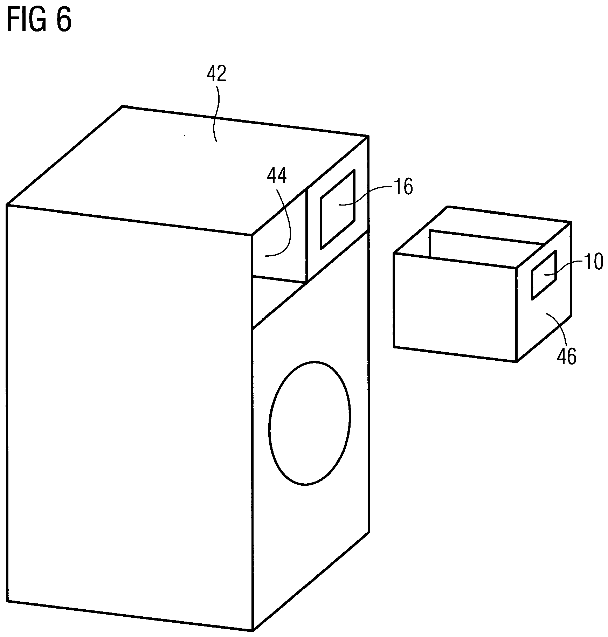

FIG 6 shows a schematic perspective view of a washing machine 42 with the control system according to a sixth embodiment of the present invention. The washing machine 42 comprises a display 16 and a stack 44. The stack 44 is provided for receiving a soap drawer 46.

The washing machine 42 comprises a control device 12, which is not shown in FIG 6. The control device 12 is arranged within the washing machine 42. The display 16 is electrically connected to the control device 12.

An operating device 10 is arranged at a front side of the soap drawer 46. The operating device 10 may include one or more operating elements 14. The operating device 10 is also wireless connected to the control device 12 of the washing machine 42. The operating device 10 sends a wireless signal to the control device 12, when said operating device 10 is actuated by the user. The required energy for the wireless signal is generated by pushing and/or touching the operating device 10 as described above.

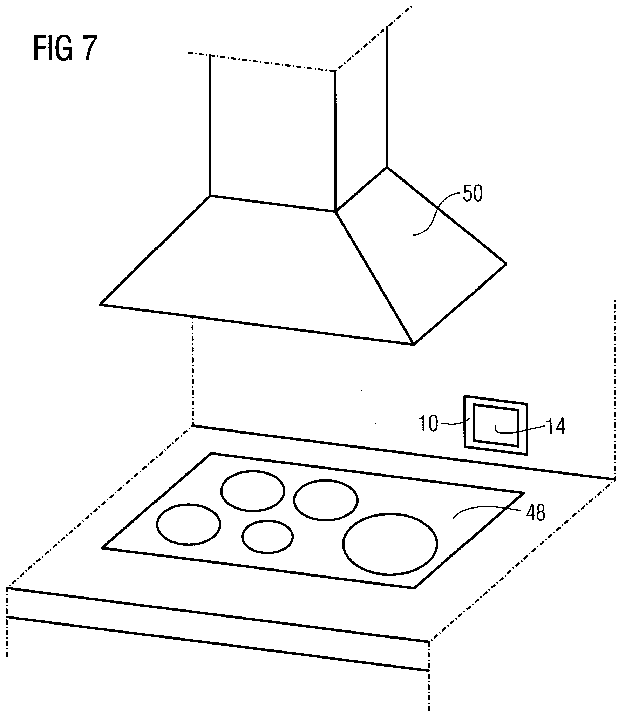

FIG 7 shows a schematic perspective view of an exhaust hood 50 for a cooking hob 48 with the control system according to a seventh embodiment of the present invention.

The exhaust hood 50 comprises a control device 12, which is not shown in FIG 7. For example, the control device 12 may be arranged within the exhaust hood 50 or below the cooking hob 48. Further, the exhaust hood 50 comprises a display 16, which is also not shown in FIG 7. The display 16 may be arranged on the cooking hob 48 or at an outer side of the exhaust hood 50. The display 16 is electrically connected to the control device 12.

An operating device 10 with one operating element 14 is arranged at a wall behind the cooking hob 48 and the exhaust hood 50. The operating element 14 is provided for switching on and switching off the exhaust hood 50.

The operating element 14 is also wireless connected to the control device 12. The operating element 14 sends a wireless signal to the control device 12, when said operating device 10 is actuated by the user. The required energy for the wireless signal is generated by pushing and/or touching the operating device 10 as described above.

The inventive control system does not require any wires between the operating elements 14 and the control device 12. Thus, the operating elements 14 can be easily positioned in a suitable place.

Further, the operating element 14 may be used as a general main switch for all domestic appliances in one place. Only one actuation of the operating element 14 is required in order to switch off the domestic appliances. In this case the user can be sure that none of the domestic appliances is still running. Although illustrative embodiments of the present invention have been described herein with reference to the accompanying drawings, it is to be understood that the present invention is not limited to this precise embodiment, and that various other changes and modifications may be affected therein by one skilled in the art without departing from the scope of the invention. All such changes and modifications are intended to be included within the scope of the invention as defined by the appended claims.

### List of Reference Numerals

- 10: operating device
- 11: cooking oven
- 12: control device
- 14: operating element
- 16: display
- 18: oven door
- 20: front panel
- 22: door handle
- 24: cooking hob
- 26: cooking hob
- 28: touch screen
- 30: refrigerator cabinet
- 32: door hinge
- 34: refrigerator door
- 36: light source
- 38: dishwasher cabinet
- 40: dishwasher door
- 42: washing machine
- 44: stack
- 46: soap drawer
- 48: cooking hob
- 50: exhaust hood

## Claims

1. A control system for a domestic appliance, wherein:
- the control system includes an operating device (10) and a control device (12),
- the operating device (10) comprises at least one operating element (14),
- the operating device (10) comprises means for sending wireless signals to the control device (12),
- the wireless signals are sent by the operating element (14),
- the control device (12) is provided for receiving the wireless signals from the operating device (10),
- the control device (12) is electrically connected to at least one component of the domestic appliance,
- the control device (12) is provided for controlling at least one component of the domestic appliance,
- the control device (12) comprises a display (16) for showing the status of the operating device (10), the control device (12) and/or the at least one component of the domestic appliance, and
- the electric energy for the control device (12) and display (16) is supplied by a power source of the domestic appliance,
**characterized in that**
the electric energy for sending the wireless signals is produced or producible by actuating and/or touching the operating element (14) by a user, wherein the operating device (10) is an integrated part of a pivoting (18, 34, 40) or slidable (46) component of the domestic appliance or the operating device (10) is a stationary device arranged in the environment of said domestic appliance.

2. The control system according to claim 1,
**characterized in that**
the electric energy for sending the wireless signals is produced or producible by transforming the mechanical energy of the actuation of the operating element (14).

3. The control system according to claim 2,
**characterized in that**
the electric energy for sending the wireless signals is produced or producible by at least one piezo-electric, magneto-strictive and/or magneto-dynamic element.

4. The control system according to any one of the preceding claims,
**characterized in that**
the electric energy for sending the wireless signals is produced or producible by touching the operating element (14), wherein the human body of the user acts as a capacitor.

5. The control system according to any one of the preceding claims,
**characterized in that**
the electric energy for sending the wireless signals is produced or producible by touching the operating element (14), wherein the temperature gradient between the finger or the hand of the user and the operating element (14) is used.

6. The control system according to any one of the preceding claims,
**characterized in that**
the domestic appliance is a cooking oven (11), wherein the operating device (10) is arranged at the oven door (18) and the display (16) is arranged at a front panel (20) of the cooking oven (11).

7. The control system according to any one of the claims 1 to 5,
**characterized in that**
the domestic appliance is a cooking hob (24; 26), wherein the operating device (10) is disposed at a distance from the cooking hob (24; 26) and the display (16) is arranged on the surface of the cooking hob (24; 26).

8. The control system according to any one of the claims 1 to 5,
**characterized in that**
the domestic appliance is a refrigerator (30, 34), wherein the operating device (10) is arranged at the refrigerator door (34) and the display (36) is arranged at a refrigerator cabinet (30) of the refrigerator (30, 34).

9. The control system according to claim 8,
**characterized in that**
an active part (36) of the display is arranged at the refrigerator cabinet (30) and a passive part (16) of the display is arranged at the refrigerator door (34) of the refrigerator (30, 34).

10. The control system according to any one of the claims 1 to 5,
**characterized in that**
the domestic appliance is a dishwasher (38, 40), wherein the operating device (10) is disposed at a distance from the dishwasher (38, 40) and the display (36) is arranged on a dishwasher door (40), in particular on an upper narrow side of the dishwasher door (40).

11. The control system according to any one of the claims 1 to 5,
**characterized in that**
the domestic appliance is a dishwasher (38, 40), wherein the operating device (10) is disposed at a distance from the dishwasher (38, 40) and the dishwasher (38, 40) comprises a projector unit, so that the display is beamed or beamable onto a floor or a wall beside the dishwasher (38, 40).

12. The control system according to any one of the claims 1 to 5,
**characterized in that**
the domestic appliance is a washing machine (42), wherein the operating device (10) is arranged at a front side of a soap drawer (46) of the washing machine (42) and the display (36) is arranged at the front side of the cabinet of the washing machine (42).

13. The control system according to any one of the claims 1 to 5,
**characterized in that**
the domestic appliance is an exhaust hood (50), wherein the operating device (10) is disposed at a distance from the exhaust hood (50) and the display (16) is arranged at the exhaust hood (50).

14. The control system according to any one of the claims 1 to 5,
**characterized in that**
the domestic appliance is an exhaust hood (50), wherein the operating device (10) is disposed at a distance from the exhaust hood (50) and the display (16) is arranged on the surface of the cooking hob (48).

15. A domestic appliance with at least one control system,
**characterized in that**
the domestic appliance (11; 24; 26; 30; 42; 50) includes at least one control system according to any one of the preceding claims 1 to 14.

## Patentansprüche

1. Steuerungssystem für ein Haushaltsgerät, wobei:
- das Steuerungssystem eine Bedienungsvorrichtung (10) und eine Steuerungsvorrichtung (12) aufweist,
- die Bedienungsvorrichtung (10) wenigstens ein Bedienungselement (14) umfasst,
- die Bedienungsvorrichtung (10) Mittel zum Senden von drahtlosen Signalen an die Steuerungsvorrichtung (12) umfasst,
- die drahtlosen Signale vom Bedienungselement (14) gesendet werden,
- die Steuerungsvorrichtung (12) zum Empfangen der drahtlosen Signale von der Bedienungsvorrichtung (10) bereitgestellt ist,
- die Steuerungsvorrichtung (12) mit wenigstens einer Komponente des Haushaltsgeräts elektrisch verbunden ist,
- die Steuerungsvorrichtung (12) zur Steuerung wenigstens einer Komponente des Haushaltsgeräts bereitgestellt ist,
- die Steuerungsvorrichtung (12) eine Anzeige (16) zum Anzeigen des Status der Bedienungsvorrichtung (10), der Steuerungsvorrichtung (12) und/oder der wenigstens einen Komponente des Haushaltsgeräts umfasst, und
- die elektrische Energie für die Steuerungsvorrichtung (12) und die Anzeige (16) von einer Stromquelle des Haushaltsgeräts zugeführt wird,
**dadurch gekennzeichnet, dass**
die elektrische Energie zum Senden der drahtlosen Signale durch Betätigung und/oder Berührung des Bedienungselements (14) durch einen Benutzer erzeugt wird oder erzeugbar ist, wobei die Bedienungsvorrichtung (10) ein integrierter Teil einer schwenkbaren (18, 34, 40) oder verschiebbaren (46) Komponente des Haushaltsgeräts ist oder die Bedienungsvorrichtung (10) eine stationäre Vorrichtung ist, die in der Umgebung des Haushaltsgeräts angeordnet ist.

2. Steuerungssystem nach Anspruch 1,
**dadurch gekennzeichnet, dass**
die elektrische Energie zum Senden der drahtlosen Signale durch Umwandlung der mechanischen Energie der Betätigung des Bedienungselements (14) erzeugt wird oder erzeugbar ist.

3. Steuerungssystem nach Anspruch 2,
**dadurch gekennzeichnet, dass**
die elektrische Energie zum Senden der drahtlosen Signale von wenigstens einem piezoelektrischen, magnetostriktiven und/oder magnetodynamischen Element erzeugt wird oder erzeugbar ist.

4. Steuerungssystem nach einem der vorhergehenden Ansprüche,
**dadurch gekennzeichnet, dass**
die elektrische Energie zum Senden der drahtlosen Signale durch Berührung des Bedienungselements (14) erzeugt wird oder erzeugbar ist, wobei der menschliche Körper des Benutzers als Kondensator wirkt.

5. Steuerungssystem nach einem der vorhergehenden Ansprüche,
**dadurch gekennzeichnet, dass**
die elektrische Energie zum Senden der drahtlosen Signale durch Berührung des Bedienungselements (14) erzeugt wird oder erzeugbar ist, wobei das Temperaturgefälle zwischen dem Finger oder der Hand des Benutzers und dem Bedienungselement (14) genutzt wird.

6. Steuerungssystem nach einem der vorhergehenden Ansprüche,
**dadurch gekennzeichnet, dass**
das Haushaltsgerät ein Ofen (11) ist, wobei die Bedienungsvorrichtung (10) an der Ofentür (18) angeordnet ist und die Anzeige (16) an einem Frontpaneel (20) des Ofens (11) angeordnet ist.

7. Steuerungssystem nach einem der Ansprüche 1 bis 5,
**dadurch gekennzeichnet, dass**
das Haushaltsgerät ein Kochfeld (24; 26) ist, wobei die Bedienungsvorrichtung (10) in einem Abstand von dem Kochfeld (24; 26) angeordnet ist und die Anzeige (16) auf der Oberfläche des Kochfelds (24; 26) angeordnet ist.

8. Steuerungssystem nach einem der Ansprüche 1 bis 5,
**dadurch gekennzeichnet, dass**
das Haushaltsgerät ein Kühlschrank (30, 34) ist, wobei die Bedienungsvorrichtung (10) an der Kühlschranktür (34) angeordnet ist und die Anzeige (36) an einem Kühlschrankgehäuse (30) des Kühlschranks (30, 34) angeordnet ist.

9. Steuerungssystem nach Anspruch 8,
**dadurch gekennzeichnet, dass**
ein aktiver Teil (36) der Anzeige am Kühlschrankgehäuse (30) angeordnet ist und ein passiver Teil (16) der Anzeige an der Kühlschranktür (34) des Kühlschranks (30, 34) angeordnet ist.

10. Steuerungssystem nach einem der Ansprüche 1 bis 5,
**dadurch gekennzeichnet, dass**
das Haushaltsgerät ein Geschirrspüler (38, 40) ist, wobei die Bedienungsvorrichtung (10) in einem Abstand von dem Geschirrspüler (38, 40) angeordnet ist und die Anzeige (36) auf einer Geschirrspülertür (40), insbesondere auf einer oberen schmalen Seite der Geschirrspülertür (40) angeordnet ist.

11. Steuerungssystem nach einem der Ansprüche 1 bis 5,
**dadurch gekennzeichnet, dass**
das Haushaltsgerät ein Geschirrspüler (38, 40) ist, wobei die Bedienungsvorrichtung (10) in einem Abstand von dem Geschirrspüler (38, 40) angeordnet ist und der Geschirrspüler (38, 40) eine Projektoreinheit umfasst, so dass die Anzeige auf einen Boden oder eine Wand neben dem Geschirrspüler (38, 40) gestrahlt wird oder strahlbar ist.

12. Steuerungssystem nach einem der Ansprüche 1 bis 5,
**dadurch gekennzeichnet, dass**
das Haushaltsgerät eine Waschmaschine (42) ist, wobei die Bedienungsvorrichtung (10) auf einer Vorderseite einer Seifenschublade (46) der Waschmaschine (42) angeordnet ist und die Anzeige (36) auf der Vorderseite des Gehäuses der Waschmaschine (42) angeordnet ist.

13. Steuerungssystem nach einem der Ansprüche 1 bis 5,
**dadurch gekennzeichnet, dass**
das Haushaltsgerät eine Abzugshaube (50) ist, wobei die Bedienungsvorrichtung (10) in einem Abstand von der Abzugshaube (50) angeordnet ist und die Anzeige (16) an der Abzugshaube (50) angeordnet ist.

14. Steuerungssystem nach einem der Ansprüche 1 bis 5,
**dadurch gekennzeichnet, dass**
das Haushaltsgerät eine Abzugshaube (50) ist, wobei die Bedienungsvorrichtung (10) in einem Abstand von der Abzugshaube (50) angeordnet ist und die Anzeige (16) auf der Oberfläche des Kochfelds (48) angeordnet ist.

15. Haushaltsgerät mit wenigstens einem Steuerungssystem,
**dadurch gekennzeichnet, dass**
das Haushaltsgerät (11; 24; 26; 30; 42; 50) wenigstens ein Steuerungssystem nach einem der vorhergehenden Ansprüche 1 bis 14 aufweist.

## Revendications

1. Système de commande pour un appareil électroménager, dans lequel:
- le système de commande comprend un dispositif de mise en marche (10) et un dispositif de commande (12),
- le dispositif de mise en marche (10) comprend au moins un élément de mise en marche (14),
- le dispositif de mise en marche (10) comprend des moyens pour envoyer des signaux sans fil au dispositif de commande (12),
- les signaux sans fil sont envoyés par l'élément de mise en marche (14),
- le dispositif de commande (12) est conçu pour recevoir les signaux sans fil en provenance du dispositif de mise en marche (10),
- le dispositif de commande (12) est connecté électriquement à au moins un composant de l'appareil électroménager,
- le dispositif de commande (12) est conçu pour commander au moins un composant de l'appareil électroménager,
- le dispositif de commande (12) comprend un écran d'affichage (16) pour montrer le statut du dispositif de mise en marche (10), du dispositif de commande (12) et/ou dudit au moins un composant de l'appareil électroménager, et
- l'énergie électrique pour le dispositif de commande (12) et l'écran d'affichage (16) est fournie par une source de puissance de l'appareil électroménager,
**caractérisé en ce que** l'énergie électrique pour envoyer les signaux sans fil est produite ou peut être produite en actionnant et/ou en touchant l'élément de mise en marche (14) par un utilisateur, dans lequel le dispositif de mise en marche (10) est une partie intégrée d'un composant pivotant (18, 34, 40) ou coulissant (46) de l'appareil électroménager ou le dispositif de mise en marche (10) est un dispositif stationnaire qui est agencé dans les environs dudit appareil électroménager.

2. Système de commande selon la revendication 1, **caractérisé en ce que** l'énergie électrique pour envoyer les signaux sans fil est produite ou peut être produite en transformant l'énergie mécanique de l'actionnement de l'élément de mise en marche (14).

3. Système de commande selon la revendication 2, **caractérisé en ce que** l'énergie électrique pour envoyer les signaux sans fil est produite ou peut être produite par au moins un élément piézoélectrique, magnétostrictif et/ou magnétodynamique.

4. Système de commande selon l'une quelconque des revendications précédentes, **caractérisé en ce que** l'énergie électrique pour envoyer les signaux sans fil est produite ou peut être produite en touchant l'élément de mise en marche (14), dans lequel le corps humain de l'utilisateur agit comme un condensateur.

5. Système de commande selon l'une quelconque des revendications précédentes, **caractérisé en ce que** l'énergie électrique pour envoyer les signaux sans fil est produite ou peut être produite en touchant l'élément de mise en marche (14), dans lequel le gradient de température entre le doigt ou la main de l'utilisateur et l'élément de mise en marche (14) est exploité.

6. Système de commande selon l'une quelconque des revendications précédentes, **caractérisé en ce que** l'appareil électroménager est un four de cuisson (11), dans lequel l'élément de mise en marche (10) est agencé sur la porte du four (18) et l'écran d'affichage (16) est agencé sur un panneau avant (20) du four de cuisson (11).

7. Système de commande selon l'une quelconque des revendications 1 à 5, **caractérisé en ce que** l'appareil électroménager est une plaque de cuisson (24; 26), dans lequel le dispositif de mise en marche (10) est disposé à une certaine distance de la plaque de cuisson (24; 26), et l'écran d'affichage (16) est agencé sur la surface de la plaque de cuisson (24; 26).

8. Système de commande selon l'une quelconque des revendications 1 à 5, **caractérisé en ce que** l'appareil électroménager est un réfrigérateur (30, 34), dans lequel le dispositif de mise en marche (10) est agencé sur la porte du réfrigérateur (34), et l'écran d'affichage (36) est agencé sur une armoire frigorifique (30) du réfrigérateur (30, 34).

9. Système de commande selon la revendication 8, **caractérisé en ce qu'**une partie active (36) de l'écran d'affichage est agencée sur l'armoire frigorifique (30) et une partie passive (16) de l'écran d'affichage est agencée sur la porte de réfrigérateur (34) du réfrigérateur (30, 34).

10. Système de commande selon l'une quelconque des revendications 1 à 5, **caractérisé en ce que** l'appareil ménager est un lave-vaisselle (38, 40), dans lequel le dispositif de mise en marche (10) est disposé à une certaine distance du lave-vaisselle (38, 40), et l'écran d'affichage (36) est agencé sur une porte de lave-vaisselle (40), en particulier sur un côté étroit supérieur de la porte de lave-vaisselle (40).

11. Système de commande selon l'une quelconque des revendications 1 à 5, **caractérisé en ce que** l'appareil électroménager est un lave-vaisselle (38, 40), dans lequel le dispositif de mise en marche (10) est disposé à une certaine distance du lave-vaisselle (38, 40), et le lave-vaisselle (38, 40) comprend une unité de projecteur, de telle sorte que l'écran d'affichage soit diffusé ou puisse être diffusé sur le sol ou sur un mur à côté du lave-vaisselle (38, 40).

12. Système de commande selon l'une quelconque des revendications 1 à 5, **caractérisé en ce que** l'appareil électroménager est une machine à laver (42), dans lequel le dispositif de mise en marche (10) est agencé sur un côté avant d'un tiroir à savon (46) de la machine à laver (42) et l'écran d'affichage (36) est agencé sur le côté avant de la carrosserie de la machine à laver (42).

13. Système de commande selon l'une quelconque des revendications 1 à 5, **caractérisé en ce que** l'appareil électroménager est une hotte à évacuation (50), dans lequel le dispositif de mise en marche (10) est disposé à une certaine distance de la hotte à évacuation (50) et l'écran d'affichage (16) est agencé sur la hotte à évacuation (50).

14. Système de commande selon l'une quelconque des revendications 1 à 5, **caractérisé en ce que** l'appareil électroménager est une hotte à évacuation (50), dans lequel le dispositif de mise en marche (10) est disposé à une certaine distance de la hotte à évacuation (50) et l'écran d'affichage (16) est agencé sur la surface de la plaque de cuisson (48).

15. Appareil électroménager comprenant au moins un système de commande, **caractérisé en ce que** l'appareil électroménager (11; 24; 26; 30; 42; 50) comprend au moins un système de commande selon l'une quelconque des revendications 1 à 14 précédentes.
